# EUROPEAN PATENT APPLICATION

(11) **EP 4 707 161 A1**
(43) Date of publication of application: **11.03.2026**
(21) Application number: 25472011.3
(22) Date of filing: 16.04.2025
(51) Int. Cl.: B63H 20/00, B63B 32/60, B63B 32/10, H01M 50/20, B63B 1/24, H01M 50/204

(54) **STRUT POWER MODULE FOR AN ELECTRIC WATERCRAFT AND ELECTRIC WATERCRAFT WITH SUCH A STRUT POWER MODULE**

(71) Applicant: Sifly AI Ltd., 1113 Sofia (BG)
(72) Inventor: Bachev, Alexander, 1113 Sofia (BG)
(74) Representative: Benatov, Samuil Gabriel

(57) **Abstract**

The strut power module according to the invention is a strut pylon (1) in which a battery pack (2) is mounted, the strut power module is connected to a propulsion module (6), and offers a detachable system for propelling watercrafts, such as boat or electric hydrofoil, which facilitates the operation of the watercraft and its individual components, and optimizes the processes of transportation, storage, repair and stocking with spare parts, as well as increases the life of the battery pack (2).

## Description

### TECHNICAL FIELD

The invention relates to a strut power module used for electric watercrafts, for example boats or hydrofoils.

### PRIOR ART

The electric hydrofoil is a complex mechanical device that combines several products into one. At its core, it is a surfboard, which is an above-water platform, under which a hydrofoil, connected to a power source and to an electric motor connected to a controller, is mounted. The power source is most often a rechargeable lithium-ion battery comprising a battery control system that ensures that the battery operates in safe conditions. The electric motor is most often brushless. The controller usually consists of main control unit for controlling the system, connected to electronic speed controller of the electric motor, sensor unit, and control module through which the surfer commands the power of the electric motor and adjusts its speed. The electronic speed controller of the electric motor ensures the conversion of direct current from the battery into alternating current passing through the three phases of the electric motor.

The hydrofoil is an assembly of underwater wings located on an underwater arrow-shaped body, which is attached to the above-water platform by means of a streamlined metal mast, usually made of aluminum, which connects the above-water platform to the hydrofoil's fuselage.

Unlike the sailing varieties of surfing, the propulsion motor in electric hydrofoils is mounted to the fuselage of the hydrofoil or attached to the mast. The power source - the battery - can be placed in or attached to the above-water platform or mast. Control of the power of the electric motor and, respectively, the speed of movement is usually achieved through a wired or wireless remote control, through which the surfer issues commands.

If we compare electric hydrofoils and hydrofoils powered without a motor - for example, wing foils, kite foils and windsurf foils - by the wind; surf foils and pump foils - by waves and the movement of the surfer's body, the electric ones are characterized by a much more complex structure, multiple components and noticeably higher weight. The average electric hydrofoils on the market have weights between 20 kg and 40 kg, while the ones without motors are in the range of 5 kg - 10 kg. The reason for this difference is the need to integrate the entire propulsion system, consisting of the motor, controllers and battery. Additional fasteners included in the construction of the board and hydrofoil, further aggravate the structure. This significant difference in weight has direct consequences on the behavior, control and seaworthiness of electric hydrofoils. The greater weight increases the inertia of the system and this makes turning, acceleration and control of the board by the surfer more difficult, requiring more force and energy. The high momentum of fast-moving e-foils also leads to an increased risk of injury in the event of a collision with people or other vessels. Finally yet importantly, the convenience of using and carrying the products is reduced.

A key element in hydrofoils for water sports is the above-water platform or surfboard. It can be made using various technologies such as composite - with a core of lightweight material (usually foam or polystyrene), wrapped in carbon and fiberglass fabrics bonded with resin. Another manufacturing option is the use of elastic, impact-resistant, waterproof and durable foam (expanded polypropylene), which is injection-molded around an aluminum chassis that withstands the forces of the hydrofoil. In both cases, when designing above-water platform for hydrofoil (electric or not), the rigidity and strength of the section with a radius of 40 cm around the place of mounting of the foil is significantly increased. An average above-water platform weighs in the range of 3-6 kg. In order to adapt such above-water platform for hydrofoil with electric motor, additional fasteners must be added to it to accommodate the battery pack inside. Typically, prefabricated trays are used, built into the above-water platform, into which the battery is placed and after that, they are closed, most often with a lid. A series of additional fixing and supporting elements to keep the battery stationary during use are added. Another complication caused by the presence of a battery placed in the above-water platform is that it has to be connected to the hydrofoil, which comprises the power cables or connectors for coupling. All these parts are the cause for the large difference in weight between electric and non-motorized foils. In addition, the complicated design has other disadvantages, such as high cost due to the need for many more steps in the manufacturing process, as well as more weak points with a potential for breakage. For example, all of the built-in fasteners around the battery compartment in the above-water platform (the compartment housing, the compartment lid hinges and latches, the through-hole between the battery compartment and the fastener for mounting the hydrofoil to the above-water platform through which the power cables pass) have the potential to separate from the composite above-water platform, to crack, and to allow water to penetrate into the core of the above-water platform, which is detrimental to it. The simpler the design of a composite above-water platform, the stronger and more reliable it is.

There are many similarities between the underwater part of an electric and standard hydrofoil powered by wind or waves. In both cases, the wings are usually made of carbon and are mounted to the fuselage. In the case of electric foils, the mast profiles chosen are wider and longer and have cavities in which the power cables from the battery to the motor pass. The latter is usually attached to the mast or to the fuselage to which the wings are attached. In general, the necessary controllers for controlling the brushless motor are placed in waterproof cavities near the motor - in the fuselage, in a cavity above the mast pad (attaching it to the above-water platform) or in rare cases in the above-water platform. As with boards, electric varieties of the underwater part of hydrofoils are very complicated in terms of construction by the electric propulsion system, which leads to an increase in their weight. If a standard hydrofoil weighs between 3 and 5 kg, the electric ones weigh about 6-10 kg.

Another factor increasing the overall weight of the electric hydrofoil is the presence of a separate waterproof battery pack, which is housed in a waterproof box made of plastic or metal. To ensure waterproofness and shock resistance, the casing of the pack must be thick and strong enough, as well as to be able to accommodate a gasket for the lid, closed with a sufficient number of screws. On the other hand, the BMS (Battery Management System) system, which manages the safety of the battery, needs a solid metal radiator to ensure adequate cooling of the circuit boards when using the battery, which does not have direct cooling while it is placed in the above-water platform. All this leads to a noticeable increase in the weight of the battery pack above the weight of the battery cells themselves, reducing the pleasure of using the product.

A disadvantage of the classic e-foil is the complexity of the system, which involves correctly assembling the hydrofoil to the above-water platform and connecting it to the battery. This procedure has potential for user error, which can lead to damage and breakage.

Another alternative method for powering a standard hydrofoil without motor is the so-called "foil assist" system. In general, it involves attaching a battery pack to the bottom of the above-water platform, to which the hydrofoil is attached. The pack contains all the electronics of the product: BMS controller, ESC (Electronic Speed Control) controller and communication module. The BMS takes care of the operation of the battery in safe conditions. The ESC controller controls the brushless motor by directly supplying the correct alternating currents to the 3 phases of the motor. The communication module is connected to a wireless remote control to control the motor speed. A cable runs from the battery pack, which is taped to the mast or runs along a metal pipe behind the mast to a brushless electric motor attached to the mast.

The big advantage of the foil assist system over the electric hydrofoil is that the added weight for the propulsion system is much lower - around 6-10 kg. Therefore, the negative effects on the performance of the hydrofoil are minimized.

However, there are many disadvantages to this advantage. For starters, the product is much more complicated to use for non-technical users. To mount it on an existing hydrofoil without motor, one must mount the motor to the mast, connect the cables from it to the battery, and secure them by attaching them to the mast. During this process, there are many places for potential errors that can lead to incorrect mounting of the motor and its disconnection from the mast, or to poor connection of the cables to the battery, which will lead to water penetration into the system and its malfunction.

Another major problem with foil assist systems is the many times increased resistance when moving in the water. On the one hand, the battery mounted under the above-water platform increases the hydrodynamic drag the bottom of the platform. When the above-water platform touches the water during flight, a strong destabilizing braking impulse is created, which shakes the surfer and can lead to his/her fall.

On the other hand, the motor mounted to the mast by means of brackets, as well as the connecting cables between it and the battery, further increase the resistance when submerged under water. This has an extremely negative effect on the hydrodynamic characteristics of the foil in the water. When the motor and cables are suddenly submerged under water, the laminar flow of water around the mast can be disrupted, become turbulent and shake the surfer severely, which is a prerequisite for his/her fall.

Third disadvantage of this type of system is the small capacity of the battery and, accordingly, its low autonomy. The small space available for attaching the battery to the above-water platform and the impossibility of excessively increasing its thickness due to the increasing frontal resistance do not allow for the placement of many battery cells in it. In addition, being mounted between the above-water platform and the mast, its housing is exposed to highpressure streams exerted by the water every time it touches the water. This puts it at risk of water penetration into the pack or into the cable connector to the motor.

Finally yet importantly, having a battery between the mast and the above-water platform increases the distance between the wings and the surfer, which changes the hydrofoil's control dynamics and can worsen turning and control characteristics due to the raising of the system's effective center of gravity.

If a practical solution for propelling a hydrofoil in the water with a battery is sought in neighboring industries, an outboard motor type product for small inflatable dinghies can be considered. Such systems offer an integrated system consisting of an aluminum profile with cavities that house a battery with BMS controller, an electric motor and a built-in ESC controller that controls it. The user's control over the motor speed is carried out directly through buttons mounted on the extruded hollow profile, in which the cells and electronics are arranged, or through a wireless remote control. Adapting such a system for electric hydrofoil would mean attaching its profile to above-water platform, and attaching a fuselage with a front and rear hydrofoil to its lower end.

Such solutions can reduce the overall weight of the propulsion system by integrating all the necessary modules into a single body. In addition, the complexity of the product is maximally simplified due to the lack of need for the user to connect the various components of the system. Fully integrated systems also have many disadvantages. Since the product contains a powerful and large-capacity battery, which is considered dangerous cargo by international standards, its transportation is very difficult and expensive and requires special certificates from the manufacturer and carrier. In cases of breakage, the transport rules are even stricter and usually it is often impossible to transport used batteries of this class. In case of damage to the motor or control electronics, the entire product has to be sent to a service center, which is very difficult due to the aforementioned reasons. In addition, even small and easy replacements of any of the parts requires shipment of the entire device, which increases the volume and, accordingly, the cost of the shipment. The fact that the battery, motor and controllers are located in one body means that any part that is defective is dangerous to replace, since this involves opening the common body with a risk of an accident when working with the batteries. Accordingly, such a device can only be repaired by highly qualified personnel, which is difficult to find.

Finally yet importantly, fully integrated systems have another big problem. There is no way to use the device with more than one battery. While with classic e-foils one can have two batteries in one set and thus he/she is able to use the product for twice as long, in the type of devices under consideration, the battery pack cannot be replaced. If the customer wants to ride for twice as long, he/she has to buy two complete sets, which is unnecessarily expensive.

Another disadvantage of fully integrated systems in one body is the fact that the motor and ESC controller, which generate the most heat during operation, are housed in the body of the battery pack. This leads to unnecessary heating of the battery and an increased risk of overheating and thermal runaway in the event of a defective BMS. In the long run, operating the battery at higher temperatures shortens its life.

In search of a better solution for electric hydrofoils, as well as for electric outboard boat motors, the specialist must address the following issues described below:
- Complex design of the above-water platform, with many built-in parts specific to the electric foil
- High weight of the above-water platform
- High weight of the hydrofoil
- Complex connectivity of the individual elements of the system: hydrofoil, above-water platform, battery, controllers and motor
- Nonoptimal hydrodynamics of the connections between the motor and the battery
- Poor repairability of the device
- Expensive and difficult transportation of the device
- Difficult assembly or mounting of the system by users

### SUMMARY OF THE INVENTION

In order to solve the issues of the prior art, the following innovative, simpler solution is proposed: a separate strut power module detachably connected to a propulsion module for propulsion of an electric hydrofoil or outboard motor of a small boat.

More specifically, according to the invention, a strut power module is provided, comprising a strut pylon for watercraft having an elongated streamlined profile with one or more cavities, the streamlined profile has two opposite ends, at least one of which is a connecting end configured to be connected by at least one mechanical connecting element to a propulsion module of watercraft. At least one externally insulated with waterproofing material battery pack, composed of parallel and/or series-connected battery cells, is built-in and fixed in one or more cavities of the strut pylon. At least one electrical connector configured for electrical connection to the propulsion module and to a charging power source is connected to the battery pack directly or indirectly by a wire connection, which at least one electrical connector is located in the connecting end of the strut pylon configured to be connected to the propulsion module of a watercraft. Each battery pack has a BMS controller fixed in the cavities of the strut pylon, and a connector for direct or indirect connection to an electronic speed controller of the propulsion module of a watercraft.

In a preferred embodiment of the invention, a communication unit is fixed in the one or more cavities of the strut pylon and connected to a signal transmitter configured for wireless communication with a remote control of the propulsion module.

Preferably, the signal transmitter is an external communication antenna.

Preferably, the communication antenna is closed and waterproofed with a material that does not obstruct electromagnetic waves in an end part of the strut pylon profile that is opposite to the connecting end of the strut pylon configured for connection to the propulsion module of a watercraft.

In a preferred embodiment of the invention, the battery cells are arranged transversely to the height of the strut pylon profile.

In one embodiment of the invention, the profile of the strut pylon in the direction of its extension is composed of two or more parts, mechanically connected to each other by waterproof connecting elements, each part having one battery pack connected to a BMS controller, all battery packs are wired to each other and form a common battery pack, wherein one of the end parts of the strut pylon has a connecting end configured for connection by at least one mechanical connecting element to the propulsion module.

In a preferred embodiment of the invention, the strut pylon is made of metal.

In a preferred embodiment of the invention, a thermally conductive gel is arranged around the battery pack in at least one cavity of the strut pylon.

The strut power module, according to the invention, can be detachably attached by means of connecting elements to a boat hull, a propulsion module with an electric outboard motor is detachably attached to a connecting end of the strut power module, which is connected for power supply to the battery pack of the strut power module through its electrical connector.

The strut power module according to the invention can be detachably attached by means of connecting elements to an electric watercraft with a hydrofoil comprising:
- above-water platform,
- propulsion module comprising a propulsion module body, as well as an underwater propulsion means for creating horizontal thrust with at least one electric motor,
- front wing and at least one stabilizer connected directly or indirectly to the propulsion module,
- strut pylon, which is a mast connecting directly or indirectly the above-water platform to the body of the propulsion module, having connecting elements for detachable mechanical fastening provided at the points of connection of the mast to the body of the propulsion module and the above-water platform,
- battery pack connected to a BMS controller and to at least one electric motor.

In this embodiment, the mast and the battery pack are combined in the strut power module as described in accordance with the invention, and one connecting end of the mast is detachably attached to the propulsion module by at least one mechanical connecting element and connected by at least one electrical connector configured for electrical connection to a corresponding at least one electrical connector of the at least one electric motor. The at least one electric motor is mounted to the body of the propulsion module, the BMS controller is connected directly or indirectly by at least one electrical connector to an electronic speed controller controlling the at least one electric motor.

In a preferred embodiment of the invention, a waterproof compartment is provided in the propulsion module, in which an electronic speed controller controlling the at least one electric motor is mounted.

In a preferred embodiment of the invention, a hydrofoil's fuselage is mounted under the body of the propulsion module, at the two ends of which the front wing and at least one stabilizer are mounted.

In a preferred embodiment of the invention, a communication unit is fixed in one or more cavities of the mast, to which a signal transmitter, configured for wireless communication with a remote control of the propulsion module is connected, the communication unit being wired directly or indirectly to the electronic speed controller controlling the at least one electric motor. The signal transmitter is closed and waterproofed with a material that does not obstruct electromagnetic waves in the end part of the mast's profile, which is configured for connection to the above-water platform. In the area of the above-water platform located directly above the mast, and in an additional area with dimensions between 10 cm x 10 cm and 20 cm x 20 cm, preferably 15 cm x 15 cm in the upper part of the nose of the above-water platform, the above-water platform is constructed without shielding materials.

In another embodiment of the invention, a communication unit is fixed in one or more cavities of the mast, to which a signal transmitter, configured for wireless communication with a remote control of the propulsion module is connected, which signal transmitter is closed and waterproofed in the profile of the mast. The above-water platform is made entirely of shielding materials, wherein between the above-water platform and the corresponding connecting element of the mast for connection to the above-water platform a pad is mounted, in which a cable waveguide is embedded and from which the cable waveguide exits, the first end of which is adapted to receive wireless signals from the signal transmitter, and the second end of the waveguide is attached to the nose of the above-water platform.

The strut power module according to the invention provides an optimized alternative to existing power modules used for watercrafts because it does not require a special design of the above-water platform to which it is attached and it can be used for any type of existing above-water platforms. It also provides improved battery cooling and eliminates the need for cables to the propulsion module.

The watercraft according to the invention provides an optimized alternative to systems with a monolithic body, comprising battery, electronics and electric motor in one, because it:
- provides the possibility of easy assembly and disassembly to a watercraft and its propulsion module,
- provides easy transportation in much more compact packaging, which lowers costs and reduces the carbon footprint, while also facilitating storage,
- improves repair and maintenance capabilities due to the lighter, simpler and smaller construction, as well as the fact that only the defective component can be sent to the service center,
- reduces the product costs for the user, because in the case of a possible problem with the power supply, only the strut power module can be replaced,
- makes it easier for the user to replace the power supply if it runs out, because the simpler strut power module allows the user to carry a larger number of strut power modules with him/her,
- increases safety when repairing damaged motor or controller, because there is no dangerous proximity to the battery,
- increases the battery life, because it is located at a sufficient distance from the motor and controller.

### DESCRIPTION OF THE ATTACHED FIGURES

The invention is explained in more detail by preferred embodiments, given as non-limiting examples of the invention, with reference to the attached figures, where:
Figure 1 is schematic view of strut power module attached to a body of propulsion module, according to a preferred embodiment of the invention,
Figure 2 is exploded view of strut power module, according to a preferred embodiment of the invention.
Figure 3 is exploded view of strut power module and propulsion module with connection directions indicated, according to a preferred embodiment of the invention.

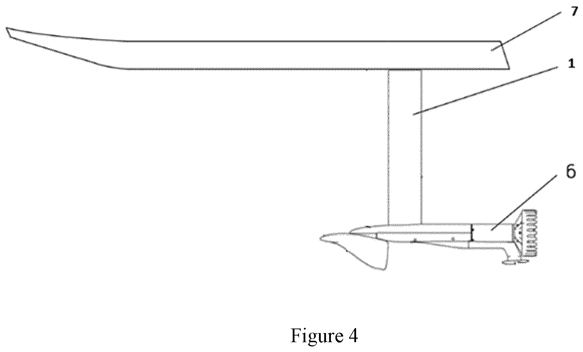

Figure 4 is side view of assembled above-water platform, strut power module and propulsion module, according to a preferred embodiment of the invention.

### EXEMPLARY EMBODIMENTS OF THE INVENTION

The strut power module, according to a preferred embodiment of the invention, can be used, for example, for small motor boats or electric hydrofoils, with a propulsion that comprises body of the propulsion module and propulsion means for creating horizontal thrust by at least one electric motor with an electronic speed controller (ESC) mounted in the body.

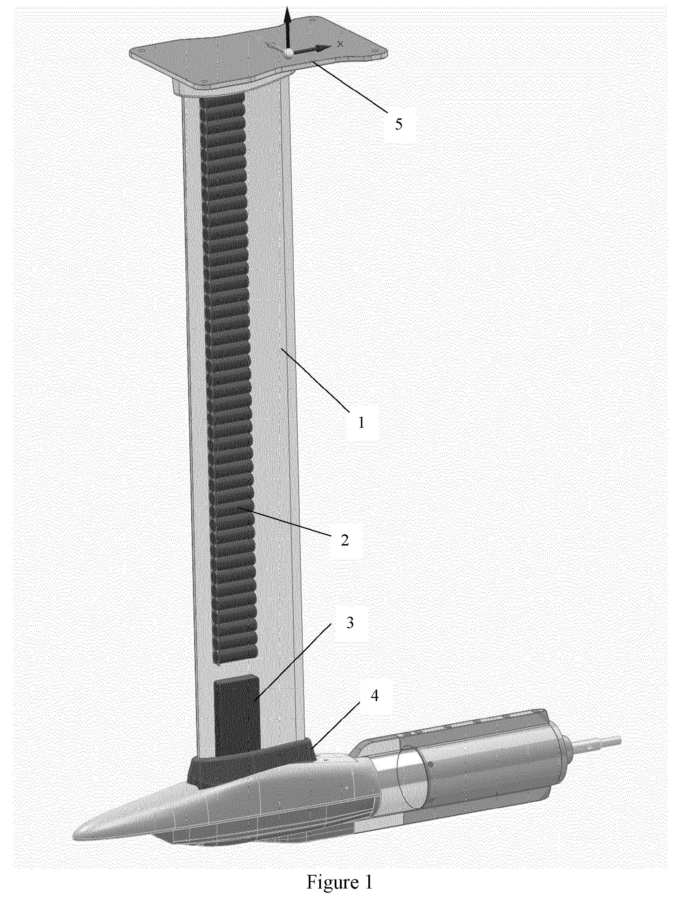

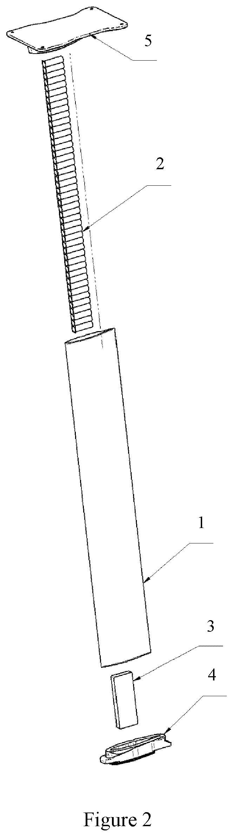

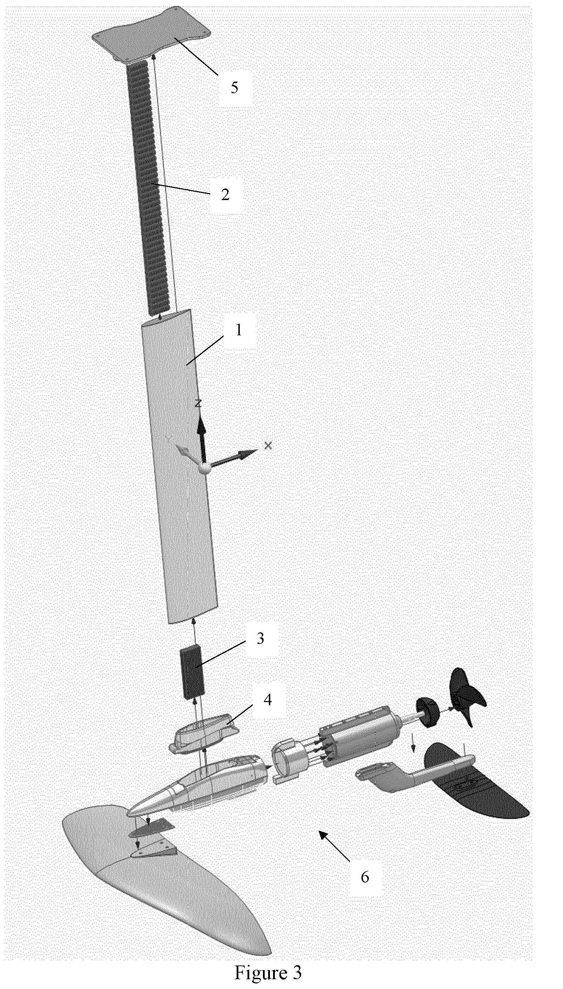

The strut power module comprises a strut pylon 1 for watercraft, having an elongated streamlined profile with one or more cavities, in which at least one externally insulated with a waterproofing material battery pack is built in and fixed, as shown in figures 1-3. Accordingly, if there is more than one cavity, one battery pack will be located in each of them.

The battery pack is composed of parallel and/or series-connected battery cells, which can be, for example, welded in opposite directions and in two rows. As a standard, the cells are welded with nickel bus bars, maintaining the sequence of poles and configuration. The entire pack is sealed with either thermal silicone or adhesive, or it is additionally covered with insulating paper. Mechanical strength is ensured by the welding itself. The remaining materials serve as a heat-conducting shell that protects the external elements against damage upon impact. An electrical connector or alternatively two connectors configured for electrical connection to the propulsion module 6 and to a charging power source, is connected to the battery pack directly or indirectly via a wire connection. That is, in the case of one connector, the electrical connector serves for connection both to the electric motor in the assembled position of the strut power module and for connection to a charging source in the disassembled position of the strut power module, when it is necessary to recharge the battery pack. In the case of two connectors, one electrical connector connects with the electric motor in the assembled position of the strut power module, and the other connects with a charging source in the disassembled position of the strut power module when the battery pack needs to be recharged.

The battery cells can be arranged transversely to the height of the strut pylon profile 1, as shown in figures 1-3, or in another suitable configuration.

A thermally conductive gel can be located around the battery pack to improve the cooling of the battery cells by the external environment - air and water.

The strut pylon 1 can be made of a known material with suitable mechanical properties such as metal, for example aluminum, or carbon composite.

The streamlined elongated profile has two opposite ends, at least one of which is a connecting end, which is connected by one or more mechanical connecting elements 4 to a propulsion module 6 of the watercraft. Only one connecting end is sufficient when used in boats, but there can also be a second connecting end, for example when used in hydrofoil, where the second end is attached by mechanical connecting elements to the above-water platform 7.

The electrical connectors are located at the connecting end of the strut pylon 1, which is connected to the propulsion module 6 of the watercraft, wherein each battery pack has a BMS controller 3, fixed in the cavities of the strut pylon 1, and a connector for direct or indirect connection via an additional wire connection with an electronic speed controller of the electric motor of the propulsion module 6.

A communication unit connected to a signal transmitter providing a wireless connection with a remote control of the propulsion module 6 can also be fixed in one of the cavities of the strut pylon 1. The signal transmitter can be an external communication antenna located at a suitable location on the above-water platform 7, so that there are no shielding elements above it, and it can be suitably connected to the communication unit, for example through cable channels. Alternatively, the communication antenna can be closed and waterproofed with a material that does not obstruct electromagnetic waves in the end part of the profile of the strut pylon 1, which is opposite to the connecting end of the strut pylon 1, which is connected to the propulsion module 6 of the watercraft.

The elongated profile of the strut pylon 1 can be one integral part or alternatively it can be composed of two or more parts along its extension, mechanically connected to each other by waterproof connection elements, each part having one battery pack connected to a BMS controller 3, all battery packs being wired to each other thus forming a common battery pack, wherein one of the end parts of the strut pylon 1 has a connection end which is connected by at least one mechanical connection element 4 to the propulsion module 6. In this embodiment, in the assembled position, the combined parts (modules) operate as a single battery pack. In the disassembled position, each module can have a smaller capacity than the restrictions for carrying batteries in passenger aircraft, which will allow the air transport of the strut power module.

In the exemplary embodiment of the invention described herein, the strut pylon of the strut power module is a mast for electric hydrofoil.

In this embodiment, the above-water platform 7, on which the strut power module is mounted, does not need to have any electronics, nor special compartments for placing a battery. This makes the above-water platform 7 (board) extremely simple to manufacture, due to the lack of fastening and additional elements that are incorporated to attach the propulsion system, as is the case with the classic electric foil. This allows to significantly reduce the weight of the board, and also reduces the costs of production and, accordingly, its price. The lower mass leads to a reduction of the inertial mass of the above-water platform 7, which facilitates turning with the hydrofoil, increases control and makes it more maneuverable.

Because the above-water platform 7 has no specific additional built-in structural elements other than standard hydrofoil attachment channels, it means that the proposed strut power module can be applied directly to a large part of the above-water platforms available on the market for other non-motorized varieties of hydrofoil sports, such as kite foil, wing foil, SUP foil and surf foil. This makes it much more attractive to practitioners of the aforementioned sports, as they can use their already existing above-water platforms with the proposed strut power module or use an above-water platform 7 designed specifically for the system, mounting their own non-motorized hydrofoils to it. This versatility of the product is extremely valuable for the expansion of the hydrofoil industry and markets.

In the proposed solution, the mast 1 (strut pylon) is attached under the standard hydrofoil above-water platform 7. It provides a strong and stable connection between the hydrofoil's wings and the above-water platform 7. The mounting is carried out, for example, by means of a simple purely mechanical assembly with a flat surface perpendicular to the plane of the mast 1, called a pad 5 or a base or heel, and there are through holes in the pad 5. The pad can be a plate or alternatively a box for additional parts with a suitable surface for attachment to the above-water platform 7, or another suitable type. The pad 5 is screwed with screws to the threaded inserts built into the above-water platform 7 or to nuts slid into special channels built for this purpose into the above-water platform 7. The battery pack is housed in one or more cavities in the elongated profile of the mast 1. In this way, the need for cables and connectors leading to the above-water platform 7 is avoided, which simplifies the design of the above-water platform 7 and the upper unit of the mast 1 for attachment to the above-water platform 7 - the pad 5. In addition, a cable antenna can come out of the pad 5, which is glued to the nose of the above-water platform 7, serving for a better connection with the remote control.

In addition to the battery pack, the BMS controller 3 is also located in the cavity of the mast 1, which monitors the correct operation of the battery in safe conditions, monitoring the voltage of the cells, their temperature and charge and discharge current. Wireless communication to a remote control in the surfer's hand is provided as part of the BMS controller 3, with communication channel to the propulsion module 6 under the mast 1, or as a separate controller communicating with the BMS 3 and with communication channel to the propulsion module 6 under the mast 1. In a third embodiment, the communication electronics unit can also be integrated into the propulsion module 6, from which an antenna, which transmits and receives signals, passes through the connection between the propulsion module 6 and the mast 1 and through the profile of the mast 1 to its upper part. It is preferable that the antenna of this part of the communication module is located in the highest part of the mast's profile 1 and it is closed and waterproofed with a material that does not obstruct electromagnetic waves, so that the signal from it can be freely emitted through its top. It is important that the structure of the above-water platform 7, which is used together with the proposed system, is built without shielding materials in the area directly above the mast 1 and in a small window 15 cm x 15 cm in the upper part of the nose. This will allow the control signals from the remote control to pass through the nose of the above-water platform 7, which is always above the water when properly used, through the interior and to the area above the hydrofoil where it can be received by the upper part of the mast 1.

In case a user wishes to use an above-water platform 7, which is entirely made of signal-shielding materials - for example carbon, an intermediate element can be mounted between the pad 5 of the mast 1 and the above-water platform 7, in which a cable waveguide is built in and from which the cable waveguide exits, the first end of which is connected wirelessly to the signal transmitter, and the second end of the waveguide is attached to the nose of the above-water platform 7. This guarantees the transmission of signals between the remote control and the mast 1 through the waveguide. The waveguide can be attached using a suitable adhesive or tape, or it can be built into the above-water platform 7 during its manufacture, so that it is not detachable.

The lower part of the mast 1 ends with an electromechanical connector, which has two functions. On the one hand, it serves as a rigid mechanical connection to the wings and transfers the lifting force generated by them to the rest of the system. On the other hand, the connector incorporates contacts, pins and/or connectors that are coupled to the subsequent propulsion module 6 for transmitting current to the electric motor.

Terminals for the positive and negative poles of the battery pack are provided, as well as a communication channel to the ESC controller in the propulsion module 6. Such a channel can be carried out wired via a connector connection via CAN-BUS, UART, series interface or other communication protocol, via an optical connection with infrared signals or in another way.

It is also possible that the ESC controller is placed in the mast 1. Then three phases will come out of the connector towards the motor and there will be no communication channel. In this variant, between the ESC controller and the BMS controller 3, an intermediate signal receiving circuit board for communication with the remote control is provided directly or indirectly through an intermediate circuit board for communication with the remote control.

Two levels of sealing of the battery pack with the BMS controller 3 and the ESC controller can be provided.

The mast 1 thus constructed is charged and discharged by the electromechanical connector. Placing the battery pack in the foil's mast 1, which is always half submerged in water, ensures the constant absorption of heat generated by the battery cells during operation. The battery pack can be located at different locations along the strut power module, and the lower it is located, the longer it will be under water and the better it will cool. Adding a thermally conductive gel or other material filling the space between the cells and the walls of the profile, and especially when making the profile of the mast 1 from metal, ensures the best cooling of the battery pack. It allows the product to be used at high power and for a long time without the risk of overheating the cells. This feature is especially important for professional users requiring high dynamic characteristics from the product.

The propulsion module 6, which is mounted by means of the opposite coupling connection on the lower half of the mast 1, is a body containing a waterproof compartment in which the ESC controller controlling the brushless electric motor is mounted. The electric motor is mounted inside the body of the module or to it, to which a propeller or an impeller-type pump wheel is attached, providing the thrust for movement. The wings of the hydrofoil can be mounted in two ways to the mast 1. In one embodiment, they are mounted on previously prepared platforms in the body of the propulsion module 6 - the front wing in its front part and the rear wing in its rear part, in which case the propulsion module 6 itself is the fuselage of the hydrofoil. In another embodiment, a fuselage is mounted under the body of the propulsion mechanism, which can have different dimensions, for example, be thin and cylindrical, at the two ends of which the front wing and the stabilizer are mounted. This embodiment allows for the production of various adapters that allow mounting existing fuselages and wings from other manufacturers. This will increase the versatility of the product and the interest in it from owners of hydrofoils and above-water platforms of other manufacturers, as they will be able to combine and reuse their parts with the proposed system.

Separation of the motor from the mast 1 in a separate propulsion module 6 provides several extremely important advantages. First, the heat generated by the component is not transmitted directly into the volume of the mast 1, where the batteries are housed. This allows maintaining a lower operating temperature of the battery pack, which increases its performance and safety. On the other hand, the propulsion module 6 is constantly submerged under water during use, which ensures the best possible cooling of both the motor and the controller, which controls it. This allows for a longer use of the motor at high power. The separation of the propulsion module 6 from the power supply module also reduces the influence of vibrations and electromagnetic interference generated by the motor, which could negatively affect the operation of the BMS controller 3 if they were part of a fully integral body. This increases the safety and reliability of the product. Easy replacement of the mast 1 with the battery is ensured, so that one set can be used with several such batteries/masts, the complexity of the battery module and the possibilities for damage or defect of the electronic modules are reduced. Additionally, in the embodiment in which the ESC controller is located in the propulsion module 6, the separation of the ESC controller further enhances the effects mentioned herein of reducing the transmission of heat and vibrations to the battery pack.

The presence of two separate modules in the propulsion system brings a number of advantages in the operation and life cycle of the product. The product can be transported in much more compact packaging, which reduces costs and carbon footprint, and it also makes it easier to store when it is in possession of a user.

In addition, any damage to one or the other module can be repaired by sending only the defective one to the service center. This reduces costs, but also makes the repair process safer, as the dangerous procedures associated with working around an unsafe battery pack are not performed when there are problems only in the propulsion module 6.

The separation of the power supply from the propulsion module 6 also gives the user the valuable opportunity to own two or more masts with batteries and to use them sequentially, effectively increasing the product's usage time. It also gives the user the option of changing only parts of the product with other parts with different characteristics. This gives him/her flexibility in configuring and improving the product over time with newer modules and thus extending the product's life.

Using a single electronic connector for charging and discharging the battery simplifies operation and reduces product weaknesses.

The mast 1 can be connected to the above-water platform 7 and propulsion module 6 by quick connections without tools, or by screws, or in another suitable way.

In the preferred embodiment, the mechanical connection element 4 is combined into one with the electrical connector and it is an electromechanical connector, through which the mast 1 and the propulsion module 6 are coupled, it is made as a quick assembly system that does not require mounting screws and use of tools. Such a system can be implemented by various ways of locking of the already placed into each other parts.

One locking option is by inserting one end of the connection into a fixed cavity on the opposite end of the other module, and then rotating it to the closed position. A rotating mechanism at the other end of the connection brings it to the coupled position, and rotation along an eccentric axis locks the rotating mechanism so that it does not allow it to be opened.

Another option for easy tool-free assembly of the two modules to each other can be accomplished by one or more T-shaped pins in the connector of one module and a tapered plate with a cutout groove in the other module. When the plate is slid into the locked position, its groove enters the T-shaped pins and presses one part against the other.

In a third embodiment, locking can be achieved by means of one or more eccentric levers that engage pins in the connector of the opposing module and, in the closed position, press it towards themselves.

In a preferred embodiment, the pad 5 in the upper part of the mast 1, which is attached to the above-water platform 7, can be made of two parts that are paired without tools. For example, the part that is attached to the above-water platform 7 can be a frame, in the front part of which there is a strong and fixed circular axis transverse to the above-water platform 7. In the rear part of the frame there is a threaded hole. On the side of the mast 1, a smaller pad 5 is attached, which enters exactly the frame attached to the above-water platform 7. In its front part, the pad 5 has a "fork" that attaches to the axis of the frame at an angle and then it is rotated to a parallel position with the plane of the frame. In this position, the front part of the pad 5 cannot be lifted orthogonally upwards from the frame. At the rear of the pad 5, there is a threaded knob, which is hand-threaded into the thread at the rear of the frame and ensures the tightening of the pad 5 to the frame. The good contact of all sides of the pad 5 with the frame ensures stability of the connection between the above-water platform 7 and the hydrofoil underneath it.

In the preferred embodiment of the propulsion module 6 and strut power module (mast 1) with quick locking mechanisms without tools, the user can benefit from an extremely easy-to-use product. Its assembly and disassembly are easy, fast, without possibility of error and without manual connection of cables and connectors between the modules. Overall, the modules and their mounting to the above-water platform 7 is provided by compact connections without large protruding areas and frontal resistance, which guarantees the good hydrodynamics when using the product. The design of the product saves a lot of fasteners and parasitic details compared to classic electric hydrofoils and noticeably reduces the weight of the final product, which has a very good effect on the dynamics of use of the product.

A LED indicator can be provided on the mast 1 or the fuselage to indicate battery charge or system status.

It will be clear to those skilled in the art that various modifications of the strut power module and the boat or electric hydrofoil with such a strut power module are possible, which also are within the scope of the invention as defined in the appended claims. All parts of the strut power module, the boat and the electric hydrofoil can be replaced with technically equivalent elements.

The reference numbers of the technical features are included in the claims solely for the purpose of increasing the comprehensibility of the claims and, therefore, these reference numbers have no limiting effect on the interpretation of the elements indicated by these reference numbers.

## Claims

1. Strut power module comprising a strut pylon (1) for watercraft, having an elongated streamlined profile with one or more cavities, which streamlined profile has two opposite ends, at least one of which is a connecting end configured for connection by mechanical connecting elements to a propulsion module (6) of watercraft, **characterized in that** at least one externally insulated with a waterproofing material battery pack (2), consisting of parallel and/or in series connected battery cells, is built into and fixed in one or more cavities of the strut pylon (1), wherein at least one electrical connector configured for electrical connection to the propulsion module (6) and to a charging power source is connected directly or indirectly to the battery pack (2) by a wire connection, which at least one electrical connector is located in the connecting end of the strut pylon (1), configured for connection to the propulsion module (6) of a watercraft, wherein each battery pack has a BMS controller (3) fixed in the cavities of the strut pylon (1), and a connector for direct or indirect connection to an electronic speed controller.

2. Strut power module according to claim 1, **characterized in that** a communication unit connected to a signal transmitter configured for wireless connection with a remote control of the propulsion module (6) is also fixed in one or more cavities of the strut pylon (1).

3. Strut power module according to claim 2, **characterized in that** the signal transmitter is an external communication antenna.

4. Strut power module according to claim 3, **characterized in that** the communication antenna is closed and waterproofed with a material that does not obstruct electromagnetic waves in an end part of the strut pylon profile, which is opposite to the connecting end of the strut pylon (1), configured for connection to the propulsion module (6) of a watercraft.

5. Strut power module according to any one of claims 1-4, **characterized in that** the battery cells are arranged transversely to the height of the strut pylon profile (1).

6. Strut power module according to any one of claims 1-5, **characterized in that** the profile of the strut pylon (1) is composed of two or more parts, mechanically connected to each other by waterproof connecting elements, each part having one battery pack (2) connected to a BMS controller (3), all battery packs (2) are wired to each other and form a common battery pack, wherein one of the end parts of the strut pylon (1) has a connecting end configured for connection by mechanical connecting elements to the propulsion module (6).

7. Strut power module according to any one of claims 1-6, **characterized in that** the strut pylon (1) is made of metal.

8. Strut power module according to any one of claims 1-7, **characterized in that** a thermally conductive gel is arranged around the battery pack (2) in at least one cavity of the strut pylon (1).

9. A boat, to the hull of which a strut power module according to any one of claims 1-8 is detachably attached by means of connecting elements, to the connecting end of which a propulsion module (6) with an electric outboard motor is detachably attached, which is connected for power supply to the battery pack of the strut power module through the electrical connector of the battery pack.

10. Electric hydrofoil watercraft comprising:
- an above-water platform (7),
- a propulsion module (6), comprising a body of the propulsion module (6), as well as an underwater propulsion means for creating horizontal thrust with at least one electric motor,
- a front wing and at least one stabilizer connected directly or indirectly to the body of the propulsion module (6),
- a strut pylon (1), which is a mast connecting directly or indirectly the above-water platform (7) to the body of the propulsion module (6), having connecting elements for detachable mechanical fastening provided at the points of connection of the mast (1) to the body of the propulsion module (6) and the above-water platform (7),
- a battery pack (2) connected to a BMS controller and to at least one electric motor,
**characterized in that** the mast (1) and the battery pack (2) are combined in the strut power module, as described in claims 1-8, and one connecting end of the mast (1) is detachably attached to the propulsion module (6) by at least one mechanical connecting element (4), and the at least one battery pack is connected by at least one electrical connector configured for electrical connection to a corresponding at least one electrical connector of the at least one electric motor, wherein the at least one electric motor is mounted to the body of the propulsion module (6), and the BMS controller (3) of the at least one battery pack is connected directly or indirectly by at least one electrical connector to an electronic speed controller controlling the at least one electric motor.

11. Electric watercraft with hydrofoil according to claim 10, **characterized in that** a waterproof compartment is provided in the propulsion module (6), in which an electronic speed controller controlling the at least one electric motor is mounted.

12. Electric watercraft with hydrofoil according to any one of claims 10 and 11, **characterized in that** a hydrofoil's fuselage is mounted under the body of the propulsion module, at the two ends of which the front wing and at least one stabilizer are mounted.

13. Electric watercraft with hydrofoil according to any of claims 10-12, **characterized in that** a communication unit is fixed in one or more cavities of the mast (1), to which a signal transmitter configured for wireless connection with remote control of the propulsion module (6) is connected, the communication unit being wired directly or indirectly to the electronic speed controller controlling the at least one electric motor, wherein the signal transmitter is closed and waterproofed with a material that does not obstruct electromagnetic waves in the end part of the mast's profile (1), which is configured for connection to the above-water platform (7), wherein in the area of the above-water platform (7), located directly above the mast (1), and in an additional area with dimensions between 10 cm x 10 cm and 20 cm x 20 cm, preferably 15 cm x 15 cm in the upper part of the nose of the above-water platform (7), the above-water platform (7) is constructed without shielding materials.

14. Electric watercraft with hydrofoil according to any one of claims 10-12, **characterized in that** a communication unit is fixed in one or more cavities of the mast (1), to which a signal transmitter configured for wireless connection with a remote control of the propulsion module (6) is connected, which signal transmitter is closed and waterproofed in the profile of the mast (1), wherein the above-water platform (6) is made entirely of shielding materials, wherein between the above-water platform (6) and the corresponding connecting element of the mast (1) for connection to the above-water platform a pad (5) is mounted, in which a cable waveguide is embedded and from which the cable waveguide exits, the first end of which is adapted to receive wireless signals from the signal transmitter, and the second end of the waveguide is attached to the nose of the above-water platform (7).
